# DEMANDE DE BREVET EUROPEEN

(11) **EP 2 120 411 A1**
(43) Date de publication de la demande: **18.11.2009**
(21) Numéro de dépôt: 09160213.6
(22) Date de dépôt: 14.05.2009
(51) Int. Cl.: H04L 12/58, H04M 1/725

(54) **Adaptation du statut de présence de messagerie instantaneé**

(30) Priorité: 15.05.2008 FR 0853139
(71) Demandeur: FRANCE TELECOM, 75015 Paris (FR)
(72) Inventeur: Potevin, François, 75015, PARIS (FR); Maillot, Michaël, 92130, ISSY LES MOULINEAUX (FR)
(74) Mandataire: Cabinet Plasseraud

(57) **Abrégé**

Un procédé d'adaptation d'un statut de messagerie instantanée d'un utilisateur d'un terminal, comprenant des étapes de
réception par le terminal au moyen d'une liaison sans fil d'un message,
détermination à partir du message reçu d'une information de localisation du terminal,
comparaison de l'information de localisation du terminal avec au moins une information de localisation préenregistrée, et
en cas de comparaison positive, la au moins une information de localisation préenregistrée étant associée en mémoire à des données de présence prédéfinies par l'utilisateur, adaptation du statut de l'utilisateur en fonction des données de présence associées à la localisation du terminal.

## Description

L'invention se rapporte à l'adaptation du statut de présence de messagerie instantanée.

Les services de messagerie instantanée permettent d'échanger en temps réel des données, par exemple des messages en format texte ou des fichiers de données, entre un utilisateur d'un terminal, et une ou plusieurs autres personnes, couramment appelées "contacts", équipées d'un ou plusieurs autres terminaux respectifs.

Les terminaux peuvent par exemple être des ordinateurs, des assistants personnels de type PDA (de l'anglais « Personal Digital Assistant »), des téléphones mobiles ou autre.

Dans un système de messagerie instantanée, l'utilisateur d'un terminal est affecté d'un statut de présence, ou de messagerie instantanée, et a une liste de contacts eux-mêmes affectés de statuts de présence respectifs.

Le statut de présence d'un utilisateur d'un service de messagerie instantanée comprend un ensemble de données, destinées à être transmises aux contacts de l'utilisateur, et ayant pour rôle de fournir à ces contacts une indication quant à l'état de présence et de disponibilité de l'utilisateur donné. Le statut de l'utilisateur est diffusé aux contacts de la liste de contacts de cet utilisateur. Réciproquement, l'utilisateur est informé des statuts des contacts de sa liste, lesquels s'affichent sur son terminal.

Le statut de présence de l'utilisateur peut comprendre une icône de présence, ayant par exemple la forme d'une pastille, sélectionnée parmi un ensemble d'icônes correspondant respectivement à différents statuts prédéfinis de la messagerie instantanée, par exemple "en ligne", "occupé", "ne pas déranger", "en réunion", etc. Le statut de présence de l'utilisateur peut également comprendre un message personnel, par exemple « à la maison », « au ski jusqu'à dimanche » ou "en congés jusqu'à lundi". Ce message est défini par l'utilisateur lui-même et a pour objet de fournir des informations complémentaires au statut de présence de l'utilisateur et généralement relatives à la situation de l'utilisateur (lieu où il se trouve, circonstances dans lesquelles il se trouve, etc.).

A partir du statut de l'utilisateur, un contact peut décider de communiquer avec l'utilisateur selon un mode synchrone ou asynchrone, selon que le statut indique que l'utilisateur est disponible ou indisponible.

Le statut d'un utilisateur peut être au moins en partie actualisé par l'utilisateur. Cette mise à jour étant manuelle et à l'initiative de l'utilisateur, elle n'est pas systématique et dépend fortement du comportement de l'utilisateur.

Il peut arriver que l'utilisateur oublie de modifier son statut de messagerie instantanée, risquant par-là d'induire ses contacts en erreur. Par exemple, lorsqu'un utilisateur emporte son terminal de son lieu de travail à son domicile, si l'utilisateur n'actualise pas son statut, celui-ci indiquera « En ligne disponible - au bureau ». Les contacts de l'utilisateur sont amenés à croire que l'utilisateur se trouve sur son lieu de travail, et à s'abstenir d'initier une conversation avec l'utilisateur, alors que l'utilisateur est en fait à son domicile.

Il existe donc un besoin pour rendre la mise à jour du statut de messagerie instantanée d'un utilisateur plus systématique.

Selon un premier aspect, l'invention a pour objet un procédé d'adaptation d'un statut de messagerie instantanée d'un utilisateur d'un terminal, comprenant des étapes de
réception par le terminal au moyen d'une liaison sans fil d'un message,
détermination à partir du message reçu d'une information de localisation du terminal,
comparaison de l'information de localisation du terminal avec au moins une information de localisation préenregistrée, et
en cas de comparaison positive, la au moins une information de localisation préenregistrée étant associée en mémoire à des données de présence prédéfinies par l'utilisateur, adaptation du statut de l'utilisateur en fonction des données de présence associées à la localisation du terminal.

Ainsi, la réception d'un message depuis un autre dispositif peut entrainer la modification du statut de présence de messagerie instantanée.

L'utilisateur de ce terminal est dispensé d'effectuer cette mise à jour manuellement.

En outre, on ne risque plus d'induire les contacts de l'utilisateur en erreur du fait d'un oubli de l'utilisateur, comme dans l'art antérieur.

En améliorant l'efficacité de la fonction de présence, ce procédé permet d'optimiser l'usage des services de messagerie instantanée.

Par exemple, un utilisateur de retour à son domicile après une journée de travail, emporte un terminal, par exemple un ordinateur portable, et rallume cet ordinateur portable. L'ordinateur portable détecte un réseau WiFi local, reçoit le SSID (de l'anglais « Service Set Identifier ») de ce réseau, reconnaît à partir du SSID reçu le réseau comme celui du domicile de l'utilisateur et modifie le statut de présence de façon à ce que s'affiche sur les écrans des terminaux des contacts de l'utilisateur le message « A la maison ».

Le dispositif transmettant au terminal le message peut par exemple comprendre un point d'accès d'un réseau local sans fil, une station de base d'un réseau cellulaire, un satellite de géolocalisation, ou autre.

La liaison sans fil peut être une liaison radio, Bluetooth, Infrared, HomeRF, WiFi, HiperLAN, GSM (de l'anglais « Global System for Mobile communications »), GPRS (de l'anglais « General Packet Radio Service »), UMTS (de l'anglais « Universal Mobile Telecommunication System »), ou autre.

Le terminal peut être connecté à la messagerie instantanée par la même technologie d'accès, ou bien par une autre technologie d'accès, par exemple Ethernet, GPS. Cette autre technologie d'accès peut être filaire ou sans fil.

On peut prévoir que l'information de localisation se déduise du message et d'au moins un autre message reçu.

L'information de localisation du terminal peut comprendre un identifiant d'un réseau local sans fil, par exemple un SSID ou un identifiant de cellule. Le réseau identifié étant local, l'identifiant fournit une information sur la localisation du terminal.

L'état de présence de messagerie instantanée est ainsi couplé à un identifiant du réseau local sans fil détecté par le terminal.

On peut prévoir par exemple d'associer à chaque réseau sans fil d'un type donné, par exemple WiFi, auquel on peut s'attendre à ce que le terminal se connecte, un message personnalisé de présence.

Le réseau local sans fil peut être un réseau auquel le terminal se connecte. Alternativement, on peut prévoir que le terminal se contente de détecter ce réseau, l'accès à ce réseau étant éventuellement interdit au terminal.

Alternativement, une pluralité de messages sont reçus d'une pluralité de dispositifs respectifs distincts du terminal, par exemple des satellites. Chacun de ces messages peut par exemple permettre d'estimer une distance entre le satellite correspondant et le terminal. L'information de localisation est déterminée à partir de ladite pluralité de messages, par exemple par triangulation. L'information de géolocalisation peut par exemple comprendre des coordonnées spatiales de la localisation du terminal, ou autre. Les messages peuvent être reçues par GPS (de l'anglais « Global Positioning System »), ou autre.

L'invention n'est pas limitée par ces exemples d'informations de localisation du terminal.

Dans le cas où l'information de localisation comporte un identifiant d'un réseau local sans fil, on peut prévoir une étape de détection du réseau local. Cette étape peut comprendre l'étape de réception du message, être effectuée préalablement à cette étape de réception, etc.

On peut prévoir, postérieurement à la réception du message, une étape de comparaison de l'identifiant du réseau local détecté à au moins un identifiant préenregistré relatif à au moins un réseau local sans fil respectif.

Le réseau local détecté peut être par exemple un réseau Bluetooth, HomeRF, Infrared, WiFi, HiperLAN, ou autre.

Les identifiants relatifs à ce au moins un réseau local sans fil peuvent être préenregistrés dans le terminal, ou dans tout autre dispositif susceptible de communiquer avec le terminal, comme par exemple un serveur distant. Par exemple, un serveur distant peut stocker une table de présence mémorisant des identifiants de réseaux, et pour chaque identifiant de réseau mémorisé, des données de présence correspondant à cet identifiant de réseau. Les données de présence peuvent correspondre à des messages du type « Chez M. et Mme Martin », « A Deauville », selon la taille du réseau correspondant. Le stockage de cette table de présence dans un serveur distant peut permettre à une pluralité de terminaux d'accéder à une même table. Ceci peut être intéressant par exemple si les terminaux de cette pluralité de terminaux appartiennent à la même personne. On pourrait aussi prévoir que les terminaux de cette pluralité de terminaux appartiennent à des personnes d'une même entreprise, ou d'un même service, et que les identifiants de réseaux mémorisés dans la table de présence du serveur distant correspondent aux endroits où ces personnes sont susceptibles de se trouver, par exemple chez des clients. Il serait ainsi possible à chaque personne de savoir où se trouvent ses collègues en consultant les statuts de présence de ces collègues.

Avantageusement, il est prévu une étape de configuration au cours de laquelle on enregistre dans le terminal au moins une information de localisation relative à une localisation donnée. Pour la localisation donnée, des données de présence sont enregistrées de façon à être associées en mémoire à l'information de localisation correspondante.

Cette étape de configuration peut n'être effectuée qu'une fois, ou un nombre de fois relativement restreint, alors que les étapes de détection, de comparaison, etc. ci-dessus peuvent être effectuées plus fréquemment, par exemple à chaque déplacement du terminal.

Les données de présence peuvent être saisies manuellement.

Par exemple, l'utilisateur liste dans son terminal des identifiants des réseaux WiFi ou autre auxquels le terminal est susceptible de se connecter régulièrement. Pour chaque identifiant listé, un message personnalisé de présence est saisi et enregistré. Les réseaux listés peuvent être dits « favoris », et pour chaque réseau favori, un profil de connexion comprenant un identifiant du réseau, par exemple un SSID, et le cas échéant des données d'authentification du réseau, par exemple une clé WEP (de l'anglais « Wired Equivalent Privacy »), est enregistré dans le terminal.

On peut prévoir que lorsque le terminal détecte un réseau local dont l'identifiant ne concorde avec aucun des éventuels identifiants déjà stockés dans le terminal, un message est affiché pour prévenir l'utilisateur qu'un nouveau réseau local est détecté, et lui proposer de saisir manuellement des données de présence à associer à ce nouveau réseau. Si l'utilisateur saisit effectivement des données de présence, correspondant par exemple au message « En Crète jusqu'au 28 », ces dernières sont mémorisées, avec l'identifiant correspondant au réseau local détecté.

On peut prévoir que l'affichage de ce message n'est effectué que lorsque le terminal se trouve dans un certain mode de fonctionnement. Par exemple, l'affichage n'est effectué que si un bit de mode donné a une valeur prédéterminée.

L'invention n'est bien entendu pas limitée par la présence d'un bit de mode conditionnant l'affichage de ce message.

Alternativement, les données de présence peuvent être reçues d'un dispositif. Par exemple, lorsqu'un nouveau réseau local est détecté, le terminal peut envoyer un message de requête à un dispositif, par exemple le dispositif duquel le message est reçu ou un tiers dispositif. En réponse à cette requête, les données de présence, correspondant par exemple à nom de village, sont envoyées pour mémorisation.

On peut également prévoir que le procédé selon un aspect de l'invention n'est mis en oeuvre que si une variable de mode a une valeur prédéterminée. L'utilisateur peut ainsi configurer son terminal pour une mise à jour automatique ou manuelle du statut de présence.

L'invention n'est bien entendu pas limitée par la présence de cette variable de mode. Le terminal peut être programmé pour fonctionner seulement avec une mise à jour automatisée du statut de présence.

Selon un autre aspect, l'invention a pour objet un dispositif terminal équipé d'un service de messagerie instantanée, et apte à mettre en oeuvre le procédé selon un aspect de l'invention.

Selon encore un autre aspect, l'invention a pour objet un programme d'ordinateur destiné à être stocké dans une mémoire d'un dispositif terminal équipé d'une messagerie instantanée, et/ou stocké sur un support mémoire destiné à coopérer avec un lecteur de ce dispositif et/ou téléchargé via un réseau de télécommunication. Ce programme comporte des instructions pour la mise en oeuvre du procédé selon un aspect de l'invention, lorsque ces instructions sont exécutées par un processeur de ce dispositif terminal.

D'autres particularités et avantages de la présente invention apparaîtront dans la description détaillée ci-après, faite en référence aux dessins annexés sur lesquels :
- La figure 1 montre une vue schématique d'un immeuble de bureaux, d'une zone de couverture d'un réseau local sans fil, et d'une zone de couverture d'un réseau étendu.
- La figure 2 montre un exemple de dispositif terminal selon un mode de réalisation de l'invention, un point d'accès à un réseau local sans fil, et des terminaux de contacts de l'utilisateur du terminal.
- La figure 3 est un organigramme d'un exemple de procédé selon un mode de réalisation de l'invention.
- La figure 4 est un organigramme d'un exemple de procédé selon un autre mode de réalisation de l'invention.
- La figure 5 montre un exemple de dispositif terminal selon un mode de réalisation de l'invention, des satellites, et des terminaux de contacts de l'utilisateur du terminal.

Des références identiques désignent des objets identiques ou similaires d'une figure à l'autre.

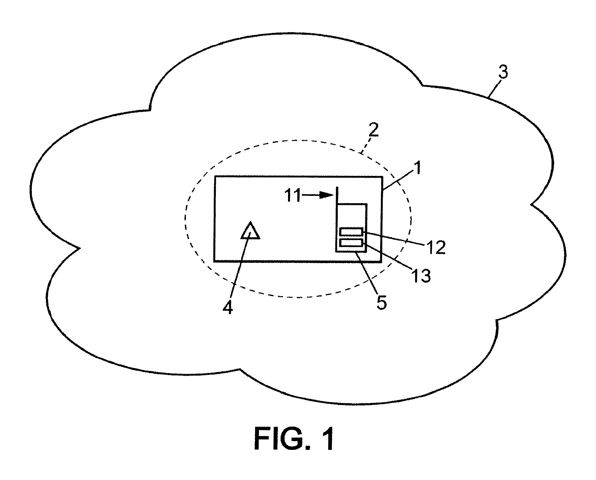

On se réfère tout d'abord à la figure 1, sur laquelle on a représenté un lieu de travail 1 vu de dessus, par exemple un immeuble de bureaux ou une usine, une zone 2 de portée d'un réseau local de communication sans fil, dit réseau WLAN (de l'anglais « Wireless Local Area Network »), une zone 3 de couverture d'un réseau étendu de communication radio, dit réseau WAN (de l'anglais « Wide Area Network »). D'emblée on notera que la référence 2 sera utilisée indifféremment pour désigner le réseau WLAN et sa zone de portée. De la même manière, la référence 3 sera utilisée indifféremment pour désigner le réseau WAN et sa zone de couverture.

On notera que la zone de couverture du réseau WAN 3 est très étendue et recouvre notamment l'immeuble 1 et la zone de portée WLAN 2. La zone 2 de portée du réseau WLAN recouvre globalement l'immeuble 1. Dans l'exemple pris, la zone WLAN 2 s'étend légèrement au-delà de l'immeuble 1. Le réseau WLAN 2 est ici un réseau WiFi protégé d'entreprise, destiné à supporter des communications WiFi d'équipements WiFi internes à l'entreprise. Il comprend une pluralité de points d'accès WiFi. Par souci de clarté, un seul point d'accès WiFi 4 a été représenté sur la figure 1.

Le réseau WAN 3 est ici un réseau de communication radio GSM. Dans l'exemple particulier de la description, on considère un terminal de communication radio 5, en l'espèce un téléphone mobile, apte à communiquer à travers le réseau GSM 3. Le terminal 5 intègre des moyens de réception sans fil, ici un récepteur radio comprenant une antenne 11 de réception WiFi, un outil de messagerie instantanée 13 et des moyens de traitement, par exemple un processeur 12, pour actualiser un statut de présence de messagerie instantanée du terminal 5.

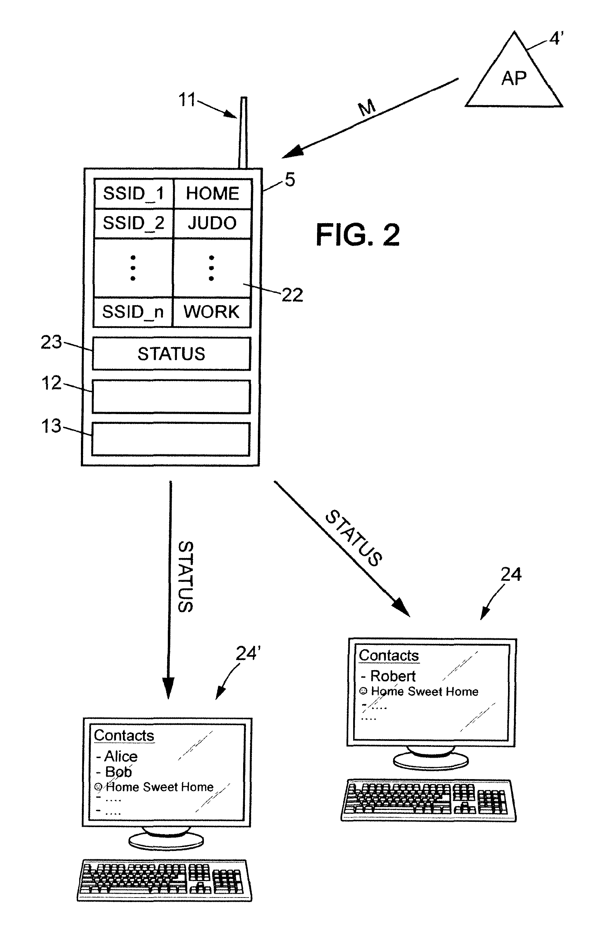

La figure 2 montre un dispositif terminal 5, ici un téléphone mobile GSM. Le dispositif 5 comporte des moyens 11 de détection d'un réseau WiFi comprenant une antenne. Cette antenne permet de recevoir un message M d'un point d'accès 4' à un réseau sans fil local de type WiFi.

Ce message M comporte un identifiant de ce réseau, par exemple le SSID de ce point d'accès 4'.

Le terminal 5 comprend des premiers moyens de traitement, par exemple un processeur 12, pour déduire du message reçu M le SSID du point d'accès 4' SSID_A.

Le dispositif terminal 5 comprend une mémoire 22 comportant une table de présence. Sont stockées dans la table de présence une liste de SSIDs SSID_1,..., SSID_n correspondant respectivement à différents réseaux locaux sans fil Wifi WLAN_1, ..., WLAN_n, et pour chaque SSID stocké, des données de présence HOME, JUDO,..., WORK associées.

Les données de présence contiennent des informations d'adaptation du statut de présence, par exemple un identifiant d'une icône et un identifiant d'un message personnel.

Selon un autre exemple, si l'adaptation n'affecte que le choix du message personnel, les données de présence peuvent correspondre chacune à un message personnel. Par exemple, les données HOME correspondent au message « Home Sweet Home », les données JUDO au message « Au club de Judo » et les données « WORK » au message « Au travail ».

Selon un autre exemple, si l'adaptation affecte aussi l'icône de présence, on peut par exemple prévoir qu'à la donnée WORK corresponde l'icône « En ligne - Occupé » et le message personnalisé « Au travail ».

Des deuxièmes moyens de traitement, ici confondus avec les premiers moyens de traitement 12, mais qui peuvent bien entendus être distincts des premiers moyens de traitement, comparent le SSID déterminé par les premiers moyens de traitement SSID_A aux SSIDs SSID_1,..., SSID_n mémorisés dans la table de présence 22.

Si l'une des comparaisons est positive, autrement dit si le terminal détecte qu'il se trouve dans la zone de portée de l'un des réseaux Wifi WLAN_1, ..., WLAN_n, par exemple le réseau WLAN_1, les données de présence HOME correspondantes, associées en mémoire au SSID_1 du réseau WLAN_1 détecté, sont utilisées pour adapter un statut de messagerie instantanée d'un utilisateur du terminal 5 en fonction de la localisation de ce terminal 5. Cette adaptation du statut de présence de l'utilisateur peut être effectuée en enregistrant de nouveaux paramètres ou en modifiant des paramètres existants dans une mémoire 23 stockant les paramètres définissant ce statut de présence.

On notera ici que les paramètres définissant un statut de présence peuvent comporter :
- une icône de présence, sélectionnée parmi un ensemble d'icônes préétabli et proposé par l'outil de messagerie instantanée, par exemple « En ligne - Disponible », « En ligne - Occupé », « En ligne
- Au téléphone » et « Hors Ligne » ;
- un message personnel, par exemple « Je travaille ! », « Au ski », etc. défini par l'utilisateur (ce message pouvant par exemple être saisi par l'utilisateur ou téléchargé par lui).

L'adaptation du statut de présence à l'aide des données de présence associées à la localisation du terminal peut affecter le choix de l'icône de présence et/ou du message personnel, selon le contenu de ces données personnelles.

Selon un autre exemple, l'adaptation peut affecter seulement les icônes de présence. Par exemple, aux données JUDO et WORK correspond l'icône « En ligne - Occupé », et aux données HOME l'icône « En ligne - Disponible ».

On peut prévoir que les paramètres définissant le statut de présence comportent seulement des pastilles de présence, ou seulement des messages personnalisés.

On peut aussi prévoir que lorsque l'utilisateur utilise le terminal 5 pour téléphoner, les paramètres soient actualisés par le processeur 12 de façon à choisir l'icône de présence « En ligne - Au téléphone ».

Les paramètres définissant le statut de présence, représentés sous la référence STATUS, sont envoyés aux terminaux 24, 24' des divers contacts de l'utilisateur du terminal 5, éventuellement sur requête de ces terminaux 24, 24'.

Ces terminaux affichent alors le statut de présence du terminal 5. Dans cet exemple, l'icône de présence est affichée sous la forme d'un émoticon correspondant à la valeur de cet icône, ici « En Ligne - Disponible », et est également affiché le message personnel des données de présence HOME, ici « Home Sweet Home ».

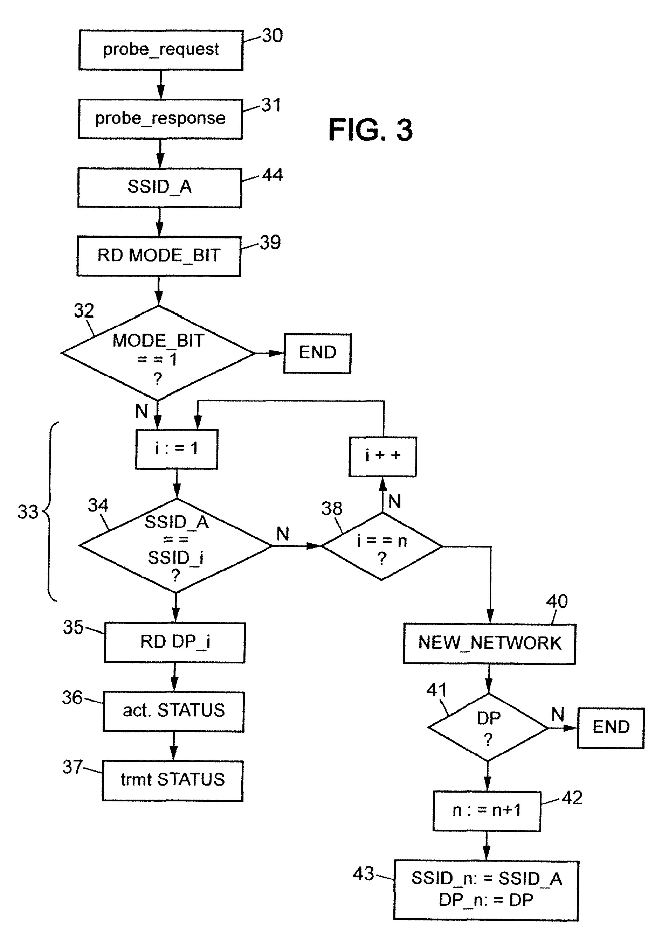

La figure 3 montre un exemple d'algorithme exécutable par un processeur d'un terminal 5 selon un mode de réalisation de l'invention.

En fonctionnement, le terminal 5 est à l'écoute des réseaux sans fil à portée, de manière à pouvoir détecter sans requête spécifique de l'utilisateur, un éventuel réseau sans fil à portée. Dans l'exemple particulier de la description, le terminal utilise une écoute active basée sur la diffusion d'une requête de sondage probe_request, lors d'une étape 30.

En réponse à une telle requête de sondage, un point d'accès WiFi à portée peut envoyer une réponse de sondage probe_response au terminal, afin de signaler sa présence au terminal. Cette réponse de sondage probe_response est reçue par le terminal lors d'une étape 31.

Dans un premier mode d'écoute active, la requête de sondage probe_request diffusée par le terminal contient un identifiant SSID nul ("SSID = NULL"), c'est-à-dire non spécifié, et la réponse de sondage du point d'accès à portée contient le SSID SSID_A du réseau WiFi auquel il appartient, dans la mesure où il s'agit d'un réseau WiFi dont le SSID n'est pas caché.

Lors d'une étape 44, le SSID du réseau détecté SSID_A est déterminé à partir du message probe_response.

Dans un second mode d'écoute active (non illustré par la figure 3), le terminal émet pour chacun de ses réseaux favoris, c'est-à-dire pour chacun des réseaux dont le profil de connexion est enregistré dans le terminal, une requête de sondage probe_request contenant l'identifiant SSID de ce réseau favori, tel que spécifié dans un profil de connexion enregistré. Si le terminal reçoit un message de réponse positif d'un point d'accès, le statut de présence est actualisé en tenant compte du SSID transmis dans la requête de sondage probe_request pour laquelle le message de réponse est positif.

Ce second mode d'écoute active est utilisé pour les réseaux WiFi favoris du terminal, même s'il s'agit de réseaux dissimulant leur identifiant SSID.

L'écoute active du terminal peut combiner ces deux modes d'écoute active.

On pourrait également envisager que le terminal utilise une écoute passive, basée sur l'écoute de trames de balise, appelées "*beacon*", émises par des points d'accès WiFi et susceptibles de contenir l'identifiant SSID du réseau WIFI considéré.

Ces différents modes d'écoute des réseaux sans fil à portée sont bien connus de l'homme du métier et ne seront donc pas davantage décrits dans la présente description. Néanmoins, pour de plus amples informations sur le sujet, le lecteur est invité à se reporter au document "802.11 Wireless Networks: The Definitive Guide", deuxième édition, de Matthew Gast, aux éditions O'REILLY.

D'une manière générale, si le terminal détecte un réseau WiFi à portée, il identifie ce réseau en déterminant son identifiant SSID, dans la mesure où il s'agit d'un réseau dont l'identifiant SSID n'est pas caché ou bien d'un réseau favori.

Pour revenir à la figure 3, une fois que le terminal connaît l'identifiant SSID_A du réseau WiFi détecté, il compare cet identifiant SSID_A avec le ou les identifiant(s) SSID_1,..., SSID_n du ou des réseaux préenregistré(s) dans le terminal. On notera que cette étape est également réalisée sans intervention de l'utilisateur.

Ces comparaisons peuvent être mises en oeuvre à l'aide d'une boucle 33 comportant des étapes classiques d'initialisation, de test 38 et d'incrémentation. La boucle 33 comporte en outre une étape 34 de comparaison de l'identifiant SSID_A avec l'un des SSIDs mémorisés SSID_i.

On comprendra que par SSID_i, on entend le i^{ème} SSID stocké, par exemple SSID_1 pour i=1, SSID_2 pour i=2, etc.

Si l'identifiant SSID_A n'est pas reconnu parmi les SSIDs mémorisés, on sort de la boucle lors du test 38. On peut éventuellement prévoir une étape 40 d'affichage d'un message NEW_NETWORK signalant à l'utilisateur qu'un nouveau réseau a été détecté et proposant à l'utilisateur de saisir des données de présence à associer à l'identifiant SSID_A. Si l'utilisateur saisit des données de présence DP, c'est-à-dire si le test 41 est positif, on enregistre le SSID du nouveau réseau SSID_A et les données de présence saisies DP comme associées à cet SSID, lors des étapes 42 et 43.

Si l'identifiant SSID_A est reconnu comme identique à l'un des identifiants SSID_i préenregistrés, les données de présences DP_i associées à l'identifiant SSID_i sont lues lors d'une étape 35, et le statut de présence est adapté lors d'une étape 36, en fonction des données de présence DP_i.

Enfin, le nouveau statut de présence est transmis lors d'une étape 37 aux terminaux des contacts de l'utilisateur du terminal.

On peut prévoir que les comparaisons de la boucle 33, la lecture de l'étape 35, et l'adaptation du statut de présence de l'étape 36, ne soient effectuées que si une variable de mode MODE_BIT a une valeur donnée, par exemple 0. A cet effet, on peut prévoir une étape 39 de lecture de cette variable MODE_BIT, ici un bit de mode, puis une étape de test 32 quant à la valeur de cette variable.

Prenons l'exemple du terminal 5 pénétrant dans l'immeuble 1, en référence à la figure 1. Initialement, le terminal 5 se trouve hors des locaux de l'entreprise, et hors de la zone de portée du réseau WiFi d'entreprise 2.

Lorsque le terminal 5 se trouve dans l'immeuble 1, ou peu avant d'y pénétrer, le terminal 5, en écoute des réseaux WiFi à portée, détecte un réseau WiFi à portée puis identifie le réseau détecté en déterminant l'identifiant SSID de ce réseau.

Le réseau 2 est ensuite reconnu par le terminal 5 comme un réseau préenregistré, lors des comparaisons de la boucle 33 de la figure 3. Le terminal adapte alors le statut de présence de messagerie instantanée du terminal 5, en fonction des données de présence correspondant au réseau préenregistré reconnu.

Considérons maintenant que le terminal 5, qui se trouve dans l'immeuble 1 et dont le statut de présence indique que l'utilisateur se trouve sur son lieu de travail, sort de l'immeuble 1 et s'en éloigne suffisamment de manière à sortir de la zone de portée WiFi 2. Le terminal 5 détecte alors, sans intervention de l'utilisateur, qu'il n'est plus à portée du réseau WiFi 2. Plus précisément, le terminal 5 détecte ici qu'il n'est plus à portée du réseau 2 dès lors qu'il ne détecte pas ce réseau pendant une durée supérieure ou égale à une durée prédéfinie T, dite durée de temporisateur ou "timer". On peut prévoir que cette détection entraine une actualisation du statut de présence de messagerie instantanée, par exemple par annulation de la dernière adaptation de ce statut de présence.

On pourrait en variante envisager qu'une information d'indisponibilité du réseau soit envoyée au terminal 5 sous forme d'un message, lorsque le terminal sort de la zone de portée du réseau 2. L'utilisation d'un temporisateur ne serait alors pas nécessaire.

Le terminal 5 utilise une infrastructure existante d'un réseau sans fil local, ici celle du réseau WiFi 2 d'une entreprise destiné à supporter des communications entre équipements WiFi de l'entreprise, comme moyen pour détecter s'il se trouve dans les locaux de l'entreprise, ou éventuellement à proximité, et, le cas échéant, adapter le statut de présence de messagerie instantanée du terminal. Ainsi, il n'est pas nécessaire de déployer une infrastructure supplémentaire, spécifique, dans les locaux de l'entreprise pour y faire adapter automatiquement les statuts de présence des terminaux présents dans ces locaux.

En outre, lorsqu'un utilisateur quitte les locaux de l'entreprise, par exemple pour rentrer à son domicile, son terminal peut adapter de nouveau le statut de présence, sans intervention de l'utilisateur, du simple fait qu'il ne se trouve plus à portée du réseau WiFi d'entreprise 2. L'utilisateur n'a donc plus à se préoccuper de modifier manuellement son statut de présence après avoir quitté son lieu de travail.

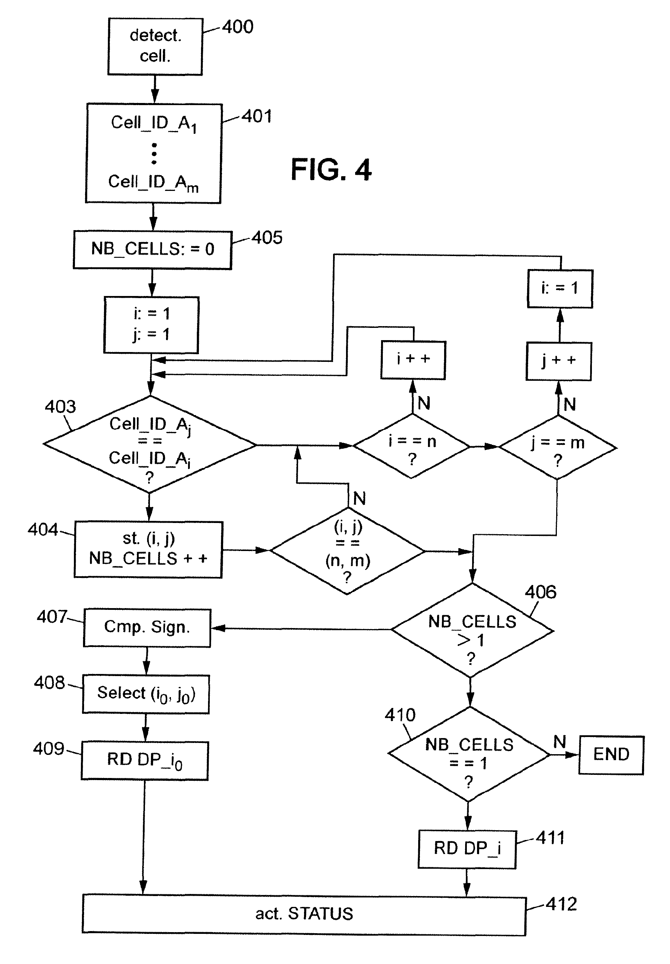

La figure 4 est un organigramme d'un exemple de procédé selon un autre mode de réalisation de l'invention. Dans cet exemple, le terminal cherche à détecter des réseaux cellulaires, par exemple des réseaux GSM, lors d'une étape 400. Le terminal est susceptible de détecter plus d'un réseau cellulaire.

En cas de détection(s), le terminal déduit de message(s) reçu(s) un ou plusieurs identifiant(s) de cellule Cell_ID_Aⱼ, j courant de 1 à m, lors d'une étape 401.

Ces identifiants Cell_ID_Aⱼ sont comparés à des identifiants de cellule préenregistrés Cell_ID_i, l'indice i courant de 1 à n. Une boucle avec des étapes classiques d'initialisation des indices i et j, de tests, et d'incrémentations est mise en oeuvre pour parcourir à la fois les identifiants Cell_ID_Aⱼ reçus à l'étape 401, et les identifiants Cell_ID_i préenregistrés.

Une étape de comparaison 403 est effectuée lors de chaque exécution de la boucle.

En cas de comparaison positive, lors d'une étape 404, les indices i, j pour lesquels la comparaison est positive sont conservés, et une variable NB_CELLS préalablement initialisée à zéro lors d'une étape 405 est incrémentée.

Un test 406 est effectué en sortie de boucle, quant à la valeur de cette variable NB_CELLS. Si cette variable est strictement supérieure à 1, c'est-à-dire si le terminal a détecté plus d'un réseau dont l'identifiant est préenregistré, des comparaisons de puissance, ou d'amplitude, de signaux sont effectuées à fin de choisir le réseau pour lequel la réception est la meilleure. Les signaux dont la puissance est comparée lors d'une étape 407 peuvent être les signaux analogiques reçus par le terminal à l'étape 401. La façon dont ces comparaisons peuvent être menées est bien connue de l'homme du métier et ne sera pas détaillée davantage.

Une fois le réseau pour lequel la réception est meilleure sélectionné, à l'étape 408, on effectue une lecture, lors d'une étape 409, des données de présence préenregistrées DP_i₀ et correspondant à l'identifiant de réseau préenregistré Cell_ID_i₀ identique à l'identifiant Cell_ID_Aⱼ₀ du réseau pour lequel la réception est meilleure.

Si le terminal a détecté un seul réseau dont l'identifiant est préenregistré, c'est-à-dire si le test 410 est un succès, une lecture des données de présence préenregistrées DP_i correspondant à cet identifiant préenregistré Cell_ID_i est effectuée lors d'une étape 411.

Puis les données de présence lues sont utilisées pour adapter le statut de présence de messagerie instantanée, lors d'une étape 412.

Selon un mode de réalisation alternatif et non représenté, on peut prévoir, pour chaque station de base, par exemple des stations de base GSM, de laquelle est reçu un message, de quantifier une amplitude ou une puissance des signaux analogiques correspondant à ce message. A partir de ces amplitudes quantifiées, on peut calculer par exemple par triangulation une information de localisation du terminal, par exemple des coordonnées spatiales. Le statut de présence peut être mis à jour en fonction des coordonnées spatiales ainsi déterminées.

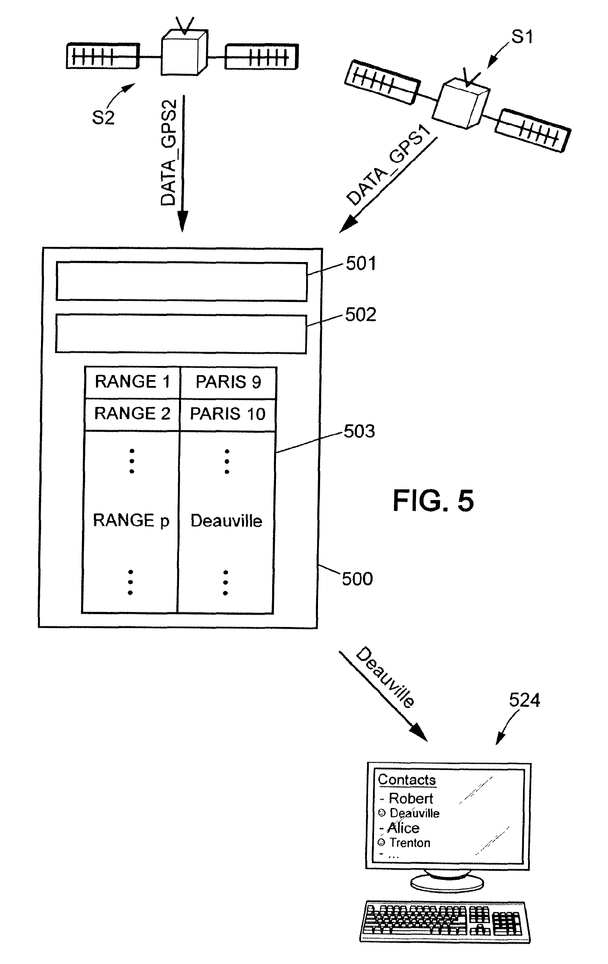

La figure 5 montre un exemple de terminal 500, selon un autre mode de réalisation de l'invention.

Ce terminal 500, par exemple un téléphone portable, comporte ici un récepteur GPS. Le terminal 500 comprend un module de réception 501 de données GPS, provenant d'une pluralité de satellites, par exemple trois ou quatre satellites, même si seulement deux satellites S1, S2 sont représentés ici.

Ces satellites S1, S2 envoient des messages DATA_GPS1, DATA_GPS2, comprenant par exemple une indication de la distance séparant le récepteur GPS 500 de chaque satellite S1, S2.

Le récepteur 500 comporte des moyens de calcul, par exemple un processeur 502, aptes à déterminer une information de localisation du récepteur 500 à partir des messages DATA_GPS1, DATA_GPS2 reçus, par exemple par triangulation. La localisation du récepteur ainsi calculée peut comprendre une latitude, une longitude et éventuellement une hauteur, ou d'autres coordonnées spatiales.

Selon un mode de réalisation alternatif et non représenté, le statut de présence est directement mis à jour à l'aide de ces coordonnées calculées. Ces coordonnées sont transmises aux terminaux des contacts de l'utilisateur du terminal 500, en vue de comparaisons afin d'associer un lieu géographique à ces coordonnées pour afficher ce lieu comme statut de présence de l'utilisateur du terminal 500.

Pour revenir à la figure 5, une table 503 permet d'associer à la localisation calculée une indication d'un lieu géographique, par exemple un quartier, un village ou autre. La table 503 peut être structurée en indications de lieux géographiques, chaque indication correspondant à des intervalles de valeurs de coordonnées spatiales.

La table 503 peut être comprise dans le terminal 500, comme représenté sur la figure 5, ou bien encore dans un autre dispositif, éventuellement distant.

La localisation du récepteur calculée par le processeur 502 est comparée aux divers intervalles de la table 503, afin de déterminer une indication de lieu géographique correspondant à l'information de localisation calculée. Le statut de présence est mis à jour en utilisant l'indication de lieu géographique déterminée.

On peut prévoir que ce soit le processeur 502 qui effectue les comparaisons et les mises à jour du statut de présence.

Le statut de présence est transmis aux terminaux des contacts de l'utilisateur du terminal 500. On peut prévoir que le statut de présence comporte seulement une indication de lieu géographique, comme représenté sur la figure 5.

On notera qu'on peut prévoir d'autres types de données personnelles qu'un message personnel. Les données personnelles peuvent par exemple comprendre une image ou une animation, de préférence de dimensions similaires aux dimensions d'une icône, ou bien encore une icône. Les données personnelles peuvent par exemple être téléchargées par l'utilisateur.

## Revendications

1. Procédé d'adaptation d'un statut de présence d'un utilisateur d'un terminal (5), comprenant des étapes de
réception par le terminal au moyen d'une liaison sans fil d'un message (M), détermination à partir du message reçu d'une information de localisation du terminal (SSID_A),
comparaison de l'information de localisation du terminal avec au moins une information de localisation préenregistrée (SSID_1, SSID_2,..., SSID_n), et
en cas de comparaison positive, la au moins une information de localisation préenregistrée étant associée en mémoire à des données de présence prédéfinies par l'utilisateur (HOME, JUDO,...,WORK), adaptation du statut de l'utilisateur en fonction des données de présence associées à la localisation du terminal.

2. Procédé selon la revendication 1, dans lequel l'information de localisation du terminal comprend un identifiant (SSID_A) d'un réseau local sans fil et, lors de l'étape de comparaison, l'identifiant du réseau local est comparé à au moins un identifiant préenregistré (SSID_1, SSID_2,..., SSID_n) relatif à au moins un réseau local sans fil.

3. Procédé selon la revendication 2, dans lequel il est prévu une étape de configuration au cours de laquelle
- on enregistre dans le terminal au moins une information de localisation, relative à une localisation donnée,
- pour la localisation donnée, on enregistre des données de présence de façon à associer en mémoire lesdites données de présence à l'information de localisation correspondante.

4. Procédé selon la revendication 1, dans lequel les données de présence définies par l'utilisateur pour une localisation donnée comprennent des données personnelles fournies par l'utilisateur.

5. Procédé selon la revendication 1, dans lequel les données de présence définies par l'utilisateur pour une localisation donnée comprennent une icône de présence, sélectionnée par l'utilisateur parmi un ensemble d'icônes de présence fournies par un outil de messagerie instantanée.

6. Procédé selon la revendication 1, comprenant des étapes de réception par le terminal d'une pluralité de messages (DATA_GPS1, DATA_GPS2) provenant d'une pluralité de dispositifs respectifs (S1, S2) distincts,
et détermination de l'information de localisation à partir des messages de ladite pluralité de messages.

7. Procédé selon la revendication 1, comprenant en outre une étape de lecture (39) de la valeur d'une variable de mode (MODE_BIT), ladite valeur conditionnant la réalisation de l'étape (36) d'adaptation du statut de présence.

8. Dispositif terminal (5) équipé d'une messagerie instantanée, et comprenant
des moyens de réception sans fil (11),
des premiers moyens de traitement (12) aptes à déterminer à partir d'un message reçu par les moyens de réception sans fil une information de localisation du terminal (SSID_A), et
des deuxièmes moyens de traitement (12) aptes à
■ comparer l'information de localisation du terminal avec au moins une information de localisation préenregistrée et
■ en cas de comparaison positive, la au moins une information de localisation préenregistrée étant associée en mémoire à des données de présence prédéfinies par l'utilisateur, adapter le statut de l'utilisateur en fonction des données de présence associées à la localisation du terminal.

9. Programme d'ordinateur comportant des instructions pour la mise en oeuvre du procédé selon la revendication 1, lorsque lesdites instructions sont exécutées par un processeur.
